# EUROPÄISCHE PATENTSCHRIFT

(11) **EP 0 634 462 B1**
(45) Veröffentlichungstag und Bekanntmachung des Hinweises auf die Patenterteilung: **03.03.1999**
(21) Anmeldenummer: 94109347.8
(22) Anmeldetag: 17.06.1994
(51) Int. Cl.: C09D 7/00, C09D 5/36

(54) **Beschichtungszusammensetzung, die auf ein Substrat aufgebracht ist und feinstteiliges TiO2 enthält**
Coating composition deposited on a substrate containing microparticles of TiO2
Composition de revêtement contenant des microparticules de TiO2 déposée sur un substrate

(30) Priorität: 13.07.1993 DE 4323372
(43) Veröffentlichungstag der Anmeldung: 18.01.1995
(73) Patentinhaber: Metallgesellschaft Aktiengesellschaft, 60325 Frankfurt am Main (DE)
(72) Erfinder: Karl, Wolf-Rüdiger, D-47198 Duisburg (DE); Winkler, Jochen, Dr., D-47509 Reuth (DE)

(56) Entgegenhaltungen:
- EP-A- 0 270 472
- EP-A- 0 285 460

## Beschreibung

Die vorliegende Erfindung betrifft eine Beschichtungszusammensetzung, die auf ein Substrat aufgebracht ist und feinstteiliges TiO₂ enthält, ein Verfahren zur Herstellung der Beschichtungszusammensetzung und deren Verwendung.

Aus EP 0 270 472 B1 ist eine Überzugszusammensetzung bekannt mit 24,0 bis 35,0 Gew.-% eines thermoplastischen oder duroplastischen Harzes, 1,1 bis 10,5 Gew.-% eines metallischen oder metallartigen Pigments und 1,1 bis 10,5 Gew.-% transparentem TiO₂, das eine Partikelgröße von 20 bis 30 nm hat. Die Überzugszusammensetzung ist als Basisbeschichtung eines Metallic Effektlackes für Karosserien in der Automobilindustrie bestimmt. Auf diese Basislackierung wird wenigstens eine Schicht eines unpigmentierten Klarlackes aufgebracht. Es können auch mehrere Schichten einer pigmentierten Basislackierung aufgetragen werden. Die pigmentierte Überzugszusammensetzung wird jedoch nicht als Deckschicht verwendet. Neben dem Metallic-Effekt zeigt die Überzugszusammensetzung den Frost-Effekt. Der Frost-Effekt kann beim Betrachten von Überzugszusammensetzungen beobachtet werden, die metallische oder metallartige Pigmente in Kombination mit feinstteiligem TiO₂ enthalten. Der Frost-Effekt hängt von der Einfallsrichtung des Lichtes relativ zur Probe und dem Beobachter ab. Bei senkrechter Betrachtung der Proben erscheint die Beschichtung gelblich bzw. goldfarben und bei flacher Betrachtung erscheint die Probe bläulich.

Aus der Publikation von J. G. Balfour in J. Oil Colour Chem. Assoc. (1), 1992, Seite 21 ff. geht hervor, daß bei Lacken, die ausschließlich feinstteiliges TiO₂ enthalten, mit der Zunahme der Pigment-Volumen-Konzentration von 0,1 bis 1,0 % an feinstteiligem TiO₂ die Gesamtremission der Lacke zunimmt. Die Zunahme der Remission der Lacke ist bei kürzerer Wellenlänge im Bereich des blauen Lichtes stärker. Dem Beobachter erscheinen die Lacke mit der Zunahme der Pigment-Volumen-Konzentration an feinstteiligem TiO₂ zunehmend milchig.

Bei herkömmlichen Beschichtungszusammensetzungen, die auf ein Substrat aufgebracht werden, wird die Verbesserung der Gesamtremission und Farbtiefe stets angestrebt. Eine Verbesserung der unbefriedigenden Stabilisierung von Farbpigmenten wird ebenfalls immer verfolgt. Besonders dann, wenn es erforderlich ist, vorzugsweise nur eine Beschichtungszusammensetzung als Deckschicht auf ein Substrat aufzubringen und daher die Gesamtremission und die Farbtiefe nur von der einen Deckschicht resultiert.

Der vorliegenden Erfindung liegt die Aufgabe zugrunde, eine Beschichtungszusammensetzung bereitzustellen, die eine hohe Gesamtremission, intensive Farbtiefe und lange Haltbarkeit aufweist sowie eine gute Flockungsstabilisierung von Farbpigmenten zeigt.

Die Aufgabe wird gelöst durch eine Beschichtungszusammensetzung, die aus 0,5 bis 30,0 Vol.-% Farbpigment und/oder Ruß, mit der Maßgabe, daß es kein Metallpigment oder metallähnliches Pigment ist, 55,0 bis 98,5 Vol.-% Bindemittelfeststoff und 0,3 bis 15 Vol.-% feinstteiligem TiO₂ mit einer Partikelgröße von 5 bis 40 nm besteht und eine hohe Gesamtremission und intensive Farbtiefe aufweist. Die Kristallitgröße wird nach Debye-Scherrer bestimmt. Die so bestimmte Kristallitgröße ist in etwa identisch mit der Teilchengröße. Der Ausdruck Beschichtungszusammensetzung bedeutet die gehärtete Beschichtung.

Die mengenmäßigen Anteile der Beschichtungszusammensetzung werden in Pigment-Volumen-Konzentration (PVK) angegeben, daher in Vol.-% oder vereinfacht in %. Die Pigment-Volumen-Konzentration bezeichnet den Volumen-Anteil eines oder mehrer Pigmente, bezogen auf das Gesamtfeststoffvolumen der gehärteten Beschichtung.

Das feinstteilige TiO₂ kann in den Kristallmodifikationen Rutil, Anatas oder in röntgenamorpher Form vorliegen. Aus Wetterbeständigkeitsgründen wird ein feinstteiliges TiO₂ in der Rutilmodifikation bevorzugt verwendet. Anorganische und/oder organische Nachbehandlung des hergestellten feinstteiligen TiO₂ hat keine Auswirkung auf dessen Eignung in den erfindungsgemäßen Beschichtungszusammensetzungen. Das Herstellungsverfahren des feinstteiligen TiO₂ oder die Partikelmorphologie des feinstteiligen TiO₂ beinträchtigen nicht die Wirkung des feinstteiligen TiO₂ in der erfindungsgemäßen Beschichtungszusammensetzung. Feinstteiliges TiO₂ kann daher unabhängig von seiner Herstellungsweise oder Partikelmorphologie in erfindungsgemäßen Beschichtungszusammensetzungen eingesetzt werden.

Die erfindungsgemäßen Beschichtungszusammensetzungen weisen eine überraschend starke Blautonverschiebung der jeweiligen Farbe auf. Die Farbe ändert sich nicht mit dem Beobachtungswinkel. Bei steiler und bei flacher Draufsicht auf die Beschichtungen ist der Farbeindruck indentisch. Die Gesamtremission der erfindungsgemäßen Beschichtungszusammensetzung nimmt durch Zugabe von feinstteiligem TiO₂ zu, wodurch die Helligkeit nicht vermindert wird. Diese Wirkung kann durch gemessene Remissionsspektren im UV-VIS-Bereich gezeigt werden. Nach herkömmlichen Verfahren werden optische Aufheller eingesetzt, um die Remissionspektren von Beschichtungen ins Blaue zu verschieben. Bei den optischen Aufhellern handelt es sich um blaugefärbte Pigmente oder im Anwendungsmedium lösliche blaue Farbmittel, die langwelliges Licht absorbieren und somit die Intensitätsverteilung der remittierten Strahlung zum Blauen hin verschieben. Der große Nachteil dabei ist jedoch, daß die Gesamtremission abnimmt.

Bei den erfindungsgemäßen Beschichtungszusammensetzungen erfolgt die Blauverschiebung der Remissionsspektren dadurch, daß im Wellenbereich der blauen Farbe, nämlich im Bereich von ca. 290 bis 440 nm eine zusätzliche Remission entsteht.

Überraschenderweise lassen sich durch Kombination von Rußen mit feinstteiligem TiO₂ erfindungsgemäße blau gefärbte Beschichtungszusammensetzungen herstellen. Herkömmliche Titandioxide führen in Kombination mit Rußen zu Beschichtungszusammensetzungen von grauer Farbe.

Mit farbstarken Blaupigmenten, wie z. B. Kupferphthalocaninblau, können in Kombination mit feinstteiligem TiO₂ erfindungsgemäße Beschichtungszusammensetzungen mit überraschend intensiver Farbtiefe und Brillanz hergestellt werden. Eine Kombination dieser Blaupigmente mit herkömmlichen Titandioxiden führen zu hellblauen Beschichtungszusammensetzungen mit einer vergleichsweise gräulich-gelblichen Erscheinung. Werden blaustichige Rotpigmente mit feinstteiligem TiO₂ kombiniert, wird der Blaustich der erfindungsgemäßen Beschichtungszusammenensetzungen erhöht, wodurch die Farbe Magenta mit intensiver Farbtiefe erhalten wird.

Bei den erfindungsgemäßen Beschichtungszusammensetzungen konnte überraschenderweise festgestellt werden, daß das feinstteilige TiO₂ auf die Farbpigmente flockungsstabilisierend wirkt.

Das feinstteilige TiO₂ zeigt eine überraschend große Beständigkeit, was sich darin äußert, daß fertige Beschichtungszusammensetzungen auch nach langer Anwendungszeit nicht durch Fotodegradation zerstört werden.

Eine Ausgestaltung der Erfindung ist, daß als Farbpigment mindestens ein Farbpigment, ausgewählt aus blauen, roten oder orangen Farbpigmenten, in der Beschichtungszusammensetzung enthalten ist. Als blaue Farbpigmente werden die Farbpigmente bezeichnet, die bevorzugt Licht im Wellenbereich von 400 nm bis 550 nm und von 700 nm bis 780 nm reflektieren. Als rote Farbpigmente werden die Farbpigmente bezeichnet, die bevorzugt das Licht im Wellenbereich von 600 nm bis 680 nm reflektieren.

Eine Ausgestaltung der Erfindung ist, daß als Bindemittelfeststoff mindestens ein Bindemittel, ausgewählt aus Alkydharz, Melaminharz, Acrylharz oder Harz in der Beschichtungszusammensetzung enthalten ist. Die Bindemittel können sowohl mit Wasser als auch mit organischen Lösungsmitteln verdünnbar sein. Sie werden auch als Dispersionen zur Formulierung der Beschichtungszusammensetzung eingesetzt. Die Bindemittel reagieren physikalisch oder chemisch vernetzend. Erfindungsgemäß werden auch mehrkomponentige Reaktivharze eingesetzt.

Eine Ausgestaltung der Erfindung ist, daß das feinstteilige TiO₂ eine spezifische Oberfläche von 30 bis 150 m²/g aufweist. Bei herkömmlichem TiO₂ mit einer Partikelgröße von 150 bis 350 nm (Teilchengröße bestimmt durch Fotozentrifugenmessungen) beträgt die spezifische Oberfläche 7 bis 22 m²/g.

Eine Ausgestaltung der Erfindung ist, daß die Gesamt-Pigment-Volumen-Konzentration aller Pigmentbestandteile von 1,0 bis 20,0 % ist. Die erfindungsgemäßen Beschichtungszusammensetzungen zeigen, daß mit einer niedrigen Pigment-Volumen-Konzentration für das Gesamtpigment überraschenderweise ein sehr gutes Deckungsvermögen erreicht wird, wodurch sie als Deckschichten besonders geeignet sind. Dies ist auf die flockungsstabilisierende Wirkung des feinstteiligen TiO₂ auf die anderen Pigmentierungsbestandteile zurückzuführen.

Eine Ausgestaltung der Erfindung ist, daß die Pigment-Volumen-Konzentration für das Farbpigment 0,5 bis 15,0 % beträgt.

Eine Ausgestaltung der Erfindung ist ein Substrat, das mit einer erfindungsgemäßen Beschichtungszusammensetzung, beschichtet ist. Als Substrate eignen sich alle herkömmlichen im Handel erhältlichen Materialien, die auf ihrer Oberfläche mit einer Deckschicht beschichtet werden können.

Die erfindungsgemäße Beschichtzusammensetzung wird dadurch hergestellt, daß Farbpigment und/oder Ruß, Bindemittelfeststoff, feinstteiliges TiO₂ und Lösungsmittel in an sich bekannter Weise dispergiert und auf ein Substrat aufgebracht werden.

Zum Dispergieren werden schnellaufende Rührwerkskugelmühlen oder Walzenstühle und andere Dispergiervorrichtungen eingesetzt. Das feinstteilige TiO₂ wird zur Mahlpaste des Farbpigments gegeben. Alternativ wird eine Paste des feinstteiligen TiO₂ dispergiert und der Beschichtungszusammensetzung zugegeben. In diesem Fall genügt eine Homogenisierung der erfindungsgemäßen Beschichtungszusammensetzung mit einem Dispergiergerät mit einer geringeren Dispergierwirkung, wie z. B. einem Dissolver.

Eine Ausgestaltung der Erfindung ist die Verwendung der erfindungsgemäßen Beschichtungszusammensetzung als Automobil-Decklack, Industrielack, Druckfarbe, Coil Coatingbeschichtung, Emballagenbeschichtung, Kunststoffbeschichtung und als dekorative Farbe sowie Lack.

Eine besondere Verwendung der erfindungsgemäßen Beschichtungszusammensetzung besteht im dekorativen Bereich, wo Beschichtungen mit intensiver Farbtiefe und Brillanz mit hoher Gesamtremission erforderlich sind.

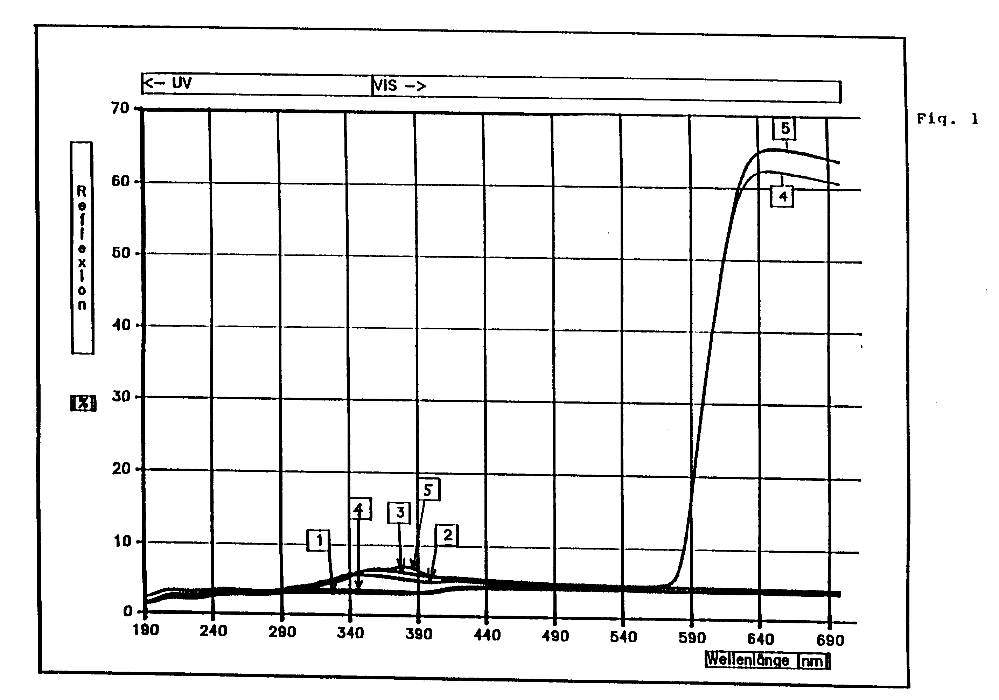

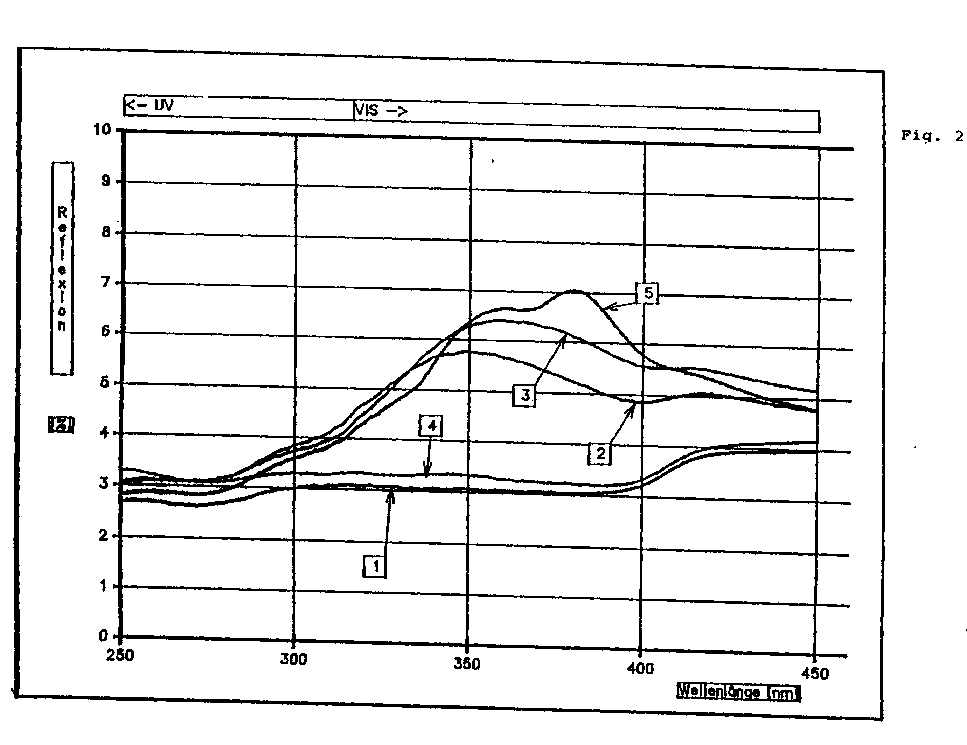

Die Erfindung wird anhand der Beispiele 1 bis 6 und der Figuren 1 und 2 erläutert. In den Beispielen 1 bis 6 werden Beschichtungszusammensetzungen vor dem Auftrag auf ein Substrat in tabellarischer Form dargestellt. Die dispergierten Beschichtungszusammensetzungen enthalten neben den erfindungsgemäßen Bestandteilen ein oder mehrere Lösungsmittel, die sich nach dem Auftrag auf ein Substrat verflüchtigen. Einige dispergierte Beschichtungszusammensetzungen enthalten zusätzlich Additive und Katalysatoren. Die dargestellten Beschichtungszusammensetzungen weisen alle in den Beschichtungszusammensetzungen vorhandenen Bestandteile vor dem Auftrag auf ein Substrat auf. Die Anteile der Bestandteile der dispergierten Beschichtungszusammensetzungen werden daher in Gewichtsprozent angegeben. Mit Trockenstoff (%) wird die prozentuale Menge an Feststoff, der sich nicht verflüchtigt, des jeweiligen Bestandteils definiert.

### Beispiele

**Beispiel 1**

| | | Farbe: blau | | | |
|---|---|---|---|---|---|
| Komponente | | Gewichtsteile Gew.-% | Dichte nass g/cm³ | Dichte trocken g/cm³ | Trockenstoff % |
| Alkydharz | Alkydal^{R} F 300¹⁾ | 55.420 | 1.000 | 1.100 | 65.0 |
| Lösungsm. | Xylol | 10.465 | 0.870 | 0.000 | 0.0 |
| Lösungsm. | Solvesso^{R} 100¹⁰⁾ | 3.223 | 0.950 | 0.000 | 0.0 |
| Melaminharz | Maprenal^{R}MF 800²⁾ | 21.832 | 1.100 | 1.100 | 55.0 |
| GasruB | Raven^{R} 1170⁶⁾ | 2.522 | 1.800 | 1.800 | 100.0 |
| TiO₂ | feinstt.TiO₂¹¹⁾ | 6.538 | 4.000 | 4.000 | 100.0 |
| | | 100.000 | 1.067 | 1.223 | |

| Pigment | PVK Vol.-% | Partikelgröße nm | Spez. Oberfl. m²/g |
|---|---|---|---|
| Gesamt | 6.5 | - | - |
| feinstt. TiO₂¹¹⁾ | 3.5 | 20-30^{a)} | 113.00^{a)} |
| Ruß⁶⁾ | 3.0 | 24^{b)} | 120.00^{b)} |

**Beispiel 2**

| | | Farbe: königsblau | | | |
|---|---|---|---|---|---|
| Komponente | | Gewichtsteile Gew.-% | Dichte nass g/cm³ | Dichte trocken g/cm³ | Trockenstoff % |
| Alkydalharz | Alkydal^{R}F261HS¹⁾ | 60.278 | 1.140 | 1.200 | 79.0 |
| Harz | Cymel^{R}301⁷⁾ | 12.072 | 1.200 | 1.200 | 98.0 |
| Phthalocyaninblau | Heliogenblau | | | | |
| | L6989 F³⁾ | 6.151 | 1.600 | 1.600 | 100.0 |
| TiO₂ | feinstt.TiO₂¹¹⁾ | 5.492 | 4.000 | 4.000 | 100.0 |
| PTSS | p-Soluolsulfons. | 0.278 | 0.950 | 1.050 | 50.0 |
| Additiv | BYK^{R}344⁵⁾ | 0.062 | 0.940 | 1.050 | 50.0 |
| Additiv | BYK^{R} 141⁵⁾ | 0.124 | 0.890 | 1.000 | 3.0 |
| Lösungsm. | Butanol | 2.233 | 0.800 | 0.000 | 0.0 |
| Lösungsm. | Ethylglykol | 2.106 | 0.930 | 0.000 | 0.0 |
| Lösungsm. | Ethylglykolacetat | 7.694 | 0.970 | 0.000 | 0.0 |
| Lösungsm. | Butylacetat | 3.510 | 0.890 | 0.000 | 0.0 |
| | | 100.000 | 1.168 | 1.298 | |

| Pigment | PVK Vol.-% | Partikelgröße nm | Spez. Oberfl. m²/g |
|---|---|---|---|
| Gesamt | 9.5 | - | - |
| feinstt. TiO₂¹¹⁾ | 2.5 | 20-30^{a)} | 113.00^{a)} |
| Farbpigment³⁾ | 7.0 | | 44.00^{b)} |

**Beispiel 3**

| | | Farbe: magenta | | | |
|---|---|---|---|---|---|
| Komponente | | Gewichtsteile Gew.-% | Dichte nass g/cm³ | Dichte trocken g/cm³ | Trockenstoff % |
| Alkydharz | Alkydal^{R}F300¹⁾ | 52.744 | 1.000 | 1.100 | 65.0 |
| Pigment | Cinquasia^{R}-Red | | | | |
| Red 254 | YRT759D⁴⁾ | 6.788 | 1.550 | 1.550 | 100.0 |
| Lösungsm. | Solvesso^{R}100¹⁰⁾ | 3.067 | 0.950 | 0.000 | 0.0 |
| Lösungsm. | Xylol | 9.959 | 0.870 | 0.000 | 0.0 |
| Melaminharz | Maprenal^{R}MF800²⁾ | 20.778 | 1.100 | 1.100 | 55.0 |
| TiO₂ | feinstt.TiO₂ ¹¹⁾ | 6.664 | 4.000 | 4.000 | 100.00 |
| | | 100.000 | 1.083 | 1.243 | |

| Pigment | PVK Vol.-% | Partikelgröße nm | Spez. Oberfl. m²/g |
|---|---|---|---|
| Gesamt | 12.7 | - | - |
| feinstt. TiO₂¹¹⁾ | 3.5 | 20-30^{a)} | 113.00^{a)} |
| Farbpigment⁴⁾ | 9.2 | 50-110^{b)} | 30-90^{b)} |

**Beispiel 4**

| | | Farbe: magenta | | | |
|---|---|---|---|---|---|
| Komponente | | Gewichtsteile Gew.-% | Dichte nass g/cm³ | Dichte trocken g/cm³ | Trockenstoff % |
| Acrylharz | Macrynal^{R}SM510n²⁾ | 49.402 | 1.000 | 1.100 | 60.0 |
| DBTL | Irgastab ^{R}DBTL⁴⁾ | 0.010 | 1.000 | 1.000 | 100.0 |
| Amin | Dimethylethanolamin | 0.141 | 1.000 | 1.000 | 100.0 |
| Siliconöl | Siliconöl L 050⁸⁾ | 0.006 | 1.000 | 1.000 | 100.0 |
| Lösungsm. | Solvesso^{R}100¹⁰⁾ | 3.167 | 0.950 | 0.000 | 0.0 |
| Lösungsm. | Xylol | 4.359 | 0.870 | 0.000 | 0.0 |
| Lösungsm. | Methoxipropylacetat | 5.100 | 0.900 | 0.000 | 0.0 |
| Pig.Red 202 | Pigment red 202⁹⁾ | 2.714 | 1.650 | 1.650 | 100.0 |
| TiO₂ | feinstt.TiO₂¹¹⁾ | 13.159 | 4.000 | 4.000 | 100.0 |
| Polyisocyanat | Desmodur N 75¹⁾ | 21.942 | 1.070 | 1.100 | 75.0 |
| | | 100.000 | 1.123 | 1.322 | |

| Pigment | PVK Vol.-% | Partikelgröße nm | Spez. Oberfl. m²/g |
|---|---|---|---|
| Gesamt | 10.5 | - | - |
| feinstt. TiO₂¹¹⁾ | 7.0 | 20-30^{a)} | 113.00^{a)} |
| Farbpigment⁹⁾ | 3.5 | | 53.00^{c)} |

**Beispiel 5**

| | | Wasserlack: blau | | | |
|---|---|---|---|---|---|
| Komponente | | Gewichtsteile Gew.-% | Dichte nass g/cm³ | Dichte trocken g/cm³ | Trockenstoff % |
| Alkydharz | Heso-Alkyd 359 W1¹²⁾ | 44.138 | 1.000 | 1.100 | 80.0 |
| Melaminharz | Maprenal^{R} MF 900²⁾ | 12.390 | 1.200 | 1.200 | 95.0 |
| Amin | Triethylamin | 4.394 | 0.900 | 0.900 | 100.0 |
| Lösungsm. | Isobutanol | 7.784 | 0.900 | 0.000 | 0.0 |
| Lösungsm. | Wasser | 19.334 | 1.000 | 0.000 | 0.0 |
| Ruß | Raven^{R}1170⁶⁾ | 2.420 | 1.800 | 1.800 | 100.0 |
| Additiv | Solingen-Zn¹³⁾ | 0.502 | 0.900 | 1.000 | 35.0 |
| Additiv | BYK^{R}320⁵⁾ | 0.126 | 0.850 | 1.000 | 52.0 |
| Additiv | Borchigen^{R} ND¹³⁾ | 0.126 | 1.100 | 1.100 | 100.0 |
| Additiv | Nopco^{R} 8034¹⁴⁾ | 0.628 | 0.920 | 0.920 | 100.0 |
| Lösungsm. | Butylglykol | 2.510 | 0.980 | 0.000 | 0.0 |
| TiO₂ | feinstt. TiO₂ | 5.648 | 3.600 | 3.600 | 100.0 |
| | | 100.000 | 1.180 | 1.231 | |

| Pigment | PVK Vol.-% | Partikelgröße nm | Spez. Oberfl. m²/g |
|---|---|---|---|
| Gesamt | 5,7 | - | - |
| feinstt. TiO₂¹¹⁾ | 3,1 | 20-30^{a)} | 113.00^{a)} |
| Ruß⁶⁾ | 2,6 | 24^{b)} | 120.00^{b)} |

**Beispiel 6**

| | | Dosenbeschichtung: blau | | | |
|---|---|---|---|---|---|
| Komponente | | Gewichtsteile Gew.-% | Dichte nass g/cm³ | Dichte trocken g/cm³ | Trockenstoff % |
| Gesättigter | Dynapol^{R} | | | | |
| Polyester | LH12¹⁵⁾ | 58.700 | 1.000 | 1.100 | 60.0 |
| Lösungsm. | Solvesso^{R} 200¹⁰⁾ | 21.290 | 0.990 | 0.000 | 0.0 |
| Katalysator | Vestoritkat.1203¹⁵⁾ | 2.914 | 0.950 | 1.050 | 50.0 |
| Lösungsm. | Butyldiglykol | 0.953 | 0.950 | 0.000 | 0.0 |
| Harz | Cymel^{R}303⁷⁾ | 9.279 | 1.100 | 1.100 | 100.0 |
| Lösungsm. | Dibasicester | 2.719 | 0.900 | 0.000 | 0.0 |
| Spezialruß | Spezialschwarz 5¹⁶⁾ | 0.698 | 1.800 | 1.800 | 100.0 |
| TiO₂ | feinstt. TiO₂ | 3.447 | 4.000 | 4.000 | 100.0 |
| | | 100.000 | 1.031 | 1.163 | |

| Pigment | PVK Vol.-% | Partikelgröße nm | Spezif. Oberfl. m²/g |
|---|---|---|---|
| Gesamt | 2.9 | - | - |
| feinstt. TiO₂¹¹⁾ | 2.0 | 20-30^{a)} | 113.00^{a)} |
| Ruß¹⁶⁾ | 0.9 | 20^{b)} | 240.00^{b)} |

^{a)} gemessen nach Debye-Scherrer
^{b)} Angabe des Herstellers
^{c)} gemessen nach DIN 66 132

### Liste der Hersteller

¹⁾ Bayer AG
²⁾ Hoechst AG
³⁾ BASF AG
⁴⁾ CIBA-GEIGY AG
⁵⁾ BYK Chemie AG
⁶⁾ Columbian Chemical
⁷⁾ American Cyanamid CO.
⁸⁾ Wacker Chemie
⁹⁾ Sun Chemical
¹⁰⁾ Texaco AG
¹¹⁾ Sachtleben Chemie GmbH
¹²⁾ Cray Valley
¹³⁾ Gebr. Borchers AG
¹⁴⁾ Münzing Chemie
¹⁵⁾ Hüls AG
¹⁶⁾ Degussa AG

### Beschreibung der Figuren 1 und 2

Figur 1 zeigt die Remissionsspektren verschiedener Beschichtungen im UV-VIS-Bereich im Wellenbereich von 190 bis 690 nm. Gemessen wird die Reflexion bei einer bestimmten Wellenlänge. Die Reflexion wird auf der Ordinate in Prozent angegeben. Die Reflexionsmessungen wurden mit der Ulbrich-Kugel (System: Phillips PU 8800) bei einem Wellenlängenvorschub von 1 nms⁻¹ mit BaSO₄ als Referenz gemessen. Figur 2 zeigt einen Ausschnitt aus den in Figur 1 dargestellten Remissionsspektren im Wellenlängenbereich von 250 bis 450 nm.

Die Proben (1) bis (5) sind Lacke mit den nachfolgend aufgeführten Pigmenten:

| Vol.-% | Vol.-% | Probe |
|---|---|---|
| 3,0 Ruß | | (1) |
| 3,0 Ruß | 3,5 feinstt. TiO₂¹¹⁾ | (2) |
| 3,0 Ruß | + 7,0 feinstt. TiO₂¹¹⁾ | (3) |
| 9,2 Irgazin rot-DPPBO⁴⁾ | + 7,0 feinstt. BaSO₄¹¹⁾ | (4) |
| 9,2 Irgazin rot-DPPBO⁴⁾ | + 3,5 feinstt. TiO₂¹¹⁾ | (5) |

In den Proben (2), (3) und (5) wurde TiO₂ mit einer Partikelgröße von 20 bis 30 nm verwendet. In der Probe (4) wurde BaSO₄ mit einer Partikelgröße von 150 nm bis 250 mn verwendet.

Die Proben (1) und (4) enthalten kein feinstteiliges TiO₂. Die Spektren der Proben (1) und (4) zeigen gemäß Figur 1 und 2 keinen Anstieg der Reflexion im blauen Bereich von 300 bis 400 nm. Die Proben (2), (3) und (5) enthalten feinstteiliges TiO₂ in unterschiedlichen Pigment-Volumen-Konzentrationen. Die Proben (2) und (3) unterscheiden sich in der Pigment-Volumen-Konzentration an feinstteiligem TiO₂. Die Probe (2) enthält 3,5 Vol.-% feinstteiliges TiO₂, die Probe (3) enthält 7,0 Vol.-% feinstteiliges TiO₂. Infolgedessen weist die Probe (3) im Wellenlängenbereich von 330 bis 400 nm eine Erhöhung der Reflexion um durchschnittlich 1 % auf. Die Reflexion der Proben (4) und (5) im Bereich des roten Lichtes oberhalb von 570 nm mit einem Maximum bei 650 nm ist auf das in diesen Proben verwendete rote Pigment zurückzuführen.

Die Proben (4) und (5) unterscheiden sich dadurch, daß die Probe (5) 3,5 Vol.-% feinstteiliges TiO₂ enthält, wohingegen die Probe (4) 7 Vol.-% feinstteiliges BaSO₄ enthält. Selbst im roten Bereich weist die Probe (5) gegenüber der Probe (4) eine Zunahme der Reflexion um 5 % auf, was ein weiterer Beweis dafür ist, daß die Gesamtremission der erfindungsgemäßen Beschichtungszusammensetzungen durch Zugabe von feinstteiligem TiO₂ erhöht wird, was ein überraschendes Ergebnis der vorliegenden Erfindung ist. Darüber hinaus wurde überraschenderweise gefunden, daß beim Bestrahlen der erfindungsgemäßen Beschichtungszusammensetzungen mit einer Blaulicht-Quelle ein fluoreszenz-ähnlicher Effekt beobachtet wird.

## Patentansprüche

1. Beschichtungszusammensetzung, die auf ein Substrat aufgebracht ist und feinstteiliges TiO₂ enthält, dadurch gekennzeichnet, daß die Beschichtungszusammensetzung aus 0,5 bis 30,0 Vol.-% Farbpigment und/oder Ruß, mit der Maßgabe, daß es kein Metallpigment oder metallähnliches Pigment ist, 55,0 bis 98,5 Vol.-% Bindemittelfeststoff und 0,3 bis 15 Vol.-% feinstteiligem TiO₂ mit einer Partikelgröße von 5 bis 40 nm besteht.

2. Beschichtungszusammensetzung nach Anspruch 1, dadurch gekennzeichnet, daß als Farbpigment mindestens ein Farbpigment, ausgewählt aus blauen oder roten Farbpigmenten, enthalten ist.

3. Beschichtungszusammensetzung nach den Ansprüchen 1 oder 2, dadurch gekennzeichnet, daß als Bindemittelfeststoff mindestens ein Bindemittel, ausgewählt aus Alkydharz, Melaminharz, Acrylharz oder Harz enthalten ist.

4. Beschichtungszusammensetzung nach den Ansprüchen 1 bis 3, dadurch gekennzeichnet, daß das feinstteilige TiO₂ eine spezifische Oberfläche von 30 bis 150 m²/g aufweist.

5. Beschichtungszusammensetzung nach den Ansprüchen 1 bis 4, dadurch gekennzeichnet, daß die Gesamt-Pigment-Volumen-Konzentration aller Pigmentbestandteile von 1,0 bis 20,0 % beträgt.

6. Beschichtungszusammensetzung nach den Ansprüchen 1 bis 5, dadurch gekennzeichnet, daß die Pigment-Volumen-Konzentration für das Farbpigment 0,5 bis 15,0 % beträgt.

7. Verfahren zur Herstellung einer Beschichtungszusammensetzung gemäß den Ansprüchen 1 bis 6, dadurch gekennzeichnet, daß Farbpigment und/oder Ruß, Bindemittelfeststoff, feinstteiliges TiO₂ und Lösungsmittel in an sich bekannter Weise dispergiert und auf ein Substrat aufgebracht werden.

8. Verwendung einer Beschichtungszusammensetzung gemäß den Ansprüche 1 bis 6 als Automobil-Decklack, Industrielack, Druckfarbe, Coil Coatingbeschichtung, Emballagenbeschichtung, Kunststoffbeschichtung und dekorative Farbe sowie Lack.

## Claims

1. A coating composition which is applied to a substrate and contains ultra-fine TiO₂, characterised in that the coating composition consists of 0.5 to 30.0% by volume coloured pigment and/or carbon black, with the proviso that it is not a metallic pigment or metal-like pigment, 55.0 to 98.5% by volume binder solids and 0.3 to 15% by volume ultra-fine TiO₂ having a particle size of 5 to 40 nm.

2. A coating composition according to Claim 1, characterised in that at least one coloured pigment, selected from blue or red coloured pigments, is contained in the coating composition as the coloured pigment.

3. A coating composition according to Claims 1 or 2, characterised in that at least one binder, selected from alkyd resin, melamine resin, acrylic resin or resin is contained as binder solids.

4. A coating composition according to Claims 1 to 3, characterised in that the ultra-fine TiO₂ has a specific surface area of 30 to 150 m²/g.

5. A coating composition according to Claims 1 to 4, characterised in that the total pigment volume concentration of all the pigment constituents is from 1.0 to 20.0%.

6. A coating composition according to Claims 1 to 5, characterised in that the pigment volume concentration for the coloured pigment is 0.5 to 15.0%.

7. A method for producing a coating composition according to Claims 1 to 6, characterised in that the coloured pigment and/or carbon black, binder solids, ultra-fine TiO₂ and solvent are dispersed in known manner and are applied to a substrate.

8. The use of a coating composition according to Claims 1 to 6 as a finishing lacquer for motor vehicles, industrial coating, printing ink, coil coating, package coating, plastic coating and decorative paint, and also as paint.

## Revendications

1. Composition de revêtement, qui est appliquée sur un substrat et qui contient du TiO₂ très finement divisé, caractérisée en ce que la composition de revêtement est constituée de 0,5 à 30,0 % en volume d'un pigment coloré et/ou de noir de carbone, pourvu qu'il ne s'agisse pas d'un pigment métallique ou d'un pigment du type métallique, de 55,0 à 98,5 % en volume d'un solide liant et de 0,3 à 15 % en volume d'un TiO₂ très finement divisé ayant une granulométrie de 5 à 40 nm.

2. Composition de revêtement selon la revendication 1, caractérisée en ce qu'elle contient en tant que pigment coloré au moins un pigment coloré choisi parmi les pigments colorés bleus ou rouges.

3. Composition de revêtement selon les revendications 1 ou 2, caractérisée en ce qu'elle contient en tant que solide liant au moins un liant choisi parmi les résines alkydes, les résines de mélamine, les résines acryliques ou les résines.

4. Composition de revêtement selon les revendications 1 à 3, caractérisé en ce que le TiO₂ très finement divisé a une aire spécifique de 30 à 150 m²/g.

5. Composition de revêtement selon les revendications 1 à 4, caractérisée en ce que la concentration pigmentaire volumique totale de l'ensemble des constituants pigmentaires est de 1,0 à 20,0 %.

6. Composition de revêtement selon les revendications 1 à 5, caractérisée en ce que la concentration pigmentaire volumique du pigment coloré est de 0,5 à 15,0 %.

7. Procédé de préparation d'une composition de revêtement selon les revendications 1 à 6, caractérisé en ce qu'on disperse d'une manière connue un pigment coloré et/ou un noir de carbone, un solide liant, un TiO₂ très finement divisé et un solvant, et qu'on les applique sur un substrat.

8. Utilisation d'une composition de revêtement selon les revendications 1 à 6 en tant que vernis de finition pour automobile, peinture industrielle, encre d'imprimerie, vernis pour laquage en bande, vernis pour emballage, revêtement pour plastique et peinture décorative, et en tant que vernis.
